# EUROPEAN PATENT SPECIFICATION

(11) **EP 3 210 708 B1**
(45) Date of publication and mention of the grant of the patent: **24.01.2018**
(21) Application number: 16157556.8
(22) Date of filing: 26.02.2016
(51) Int. Cl.: B23K 9/173, B23K 9/29, B23K 9/32

(54) **WELDING GUN WITH EVENLY DISTRIBUTED GAS PRESSURE**
SCHWEISSZANGE MIT GLEICHMÄSSIG VERTEILTEM GASDRUCK
PISTOLET DE SOUDAGE AVEC PRESSION DE GAZ RÉPARTIE UNIFORMÉMENT

(43) Date of publication of application: 30.08.2017
(73) Proprietor: Lin, Yung-Sheng, Taichung City (TW); Kuo, Shui-Chi, Taichung City (TW)
(72) Inventor: Lin, Yung-Sheng, Taichung City (TW); Kuo, Shui-Chi, Taichung City (TW)
(74) Representative: Patentanwälte Hosenthien-Held und Dr. Held

(56) References cited:
- EP-A1- 1 388 389
- US-A- 3 775 584
- US-A- 5 278 392
- US-A1- 2007 056 945

## Description

The present invention relates to a tool and, more particularly, to a welding gun.

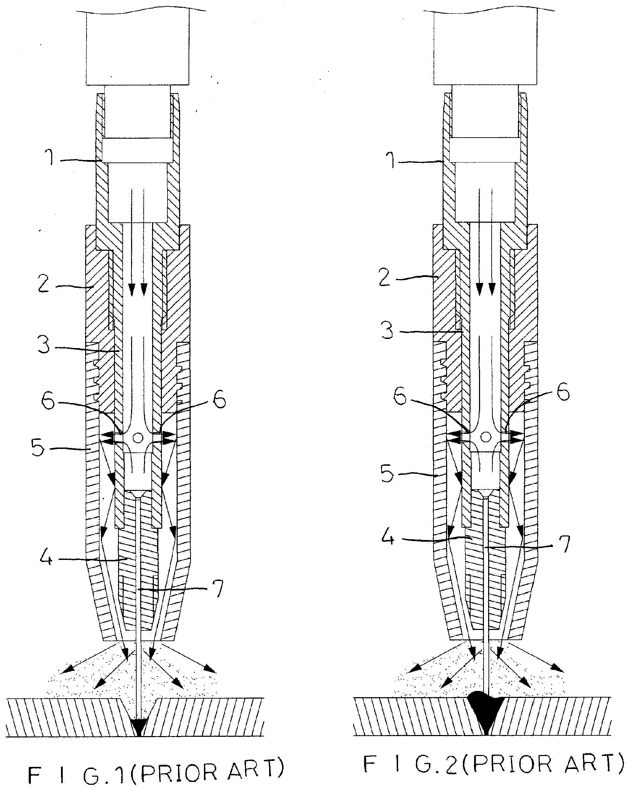

A conventional welding gun in accordance with the prior art shown in FIGS. 1 and 2 comprises an air inlet connector 1, a connecting member 2 connected with the air inlet connector 1, an air inlet pipe 3 extending from the air inlet connector 1 and extending through the connecting member 2 to allow introduction of a welding gas (such as carbon dioxide), a chuck 4 connected with the air inlet pipe 3 to allow insertion of an electrode 7, and an outer pipe 5 mounted on and located outside of the connecting member 2. A gap is defined between the outer pipe 5 and the air inlet pipe 3. The air inlet pipe 3 has a periphery provided with a plurality of vent holes 6. When in use, the welding gas flows through the air inlet connector 1, the air inlet pipe 3, the vent holes 6 of the air inlet pipe 3 and the gap between the outer pipe 5 and the air inlet pipe 3 and is injected outward from the outer pipe 5. However, when the welding gas flows through the vent holes 6 of the air inlet pipe 3 into the gap between the outer pipe 5 and the air inlet pipe 3, the welding gas is injected transversely to hit the inner wall of the outer pipe 5, thereby forming a turbulent flow, so that the pressure of the welding gas is unsteady and not evenly distributed, thereby causing an unsafe welding operation. In addition, the welding gas is unsteady and not evenly distributed so that the welding spot is not formed completely, thereby decreasing the aesthetic quality of the welding spot. Further, when the welding gas is unsteady, the electrode 7 and the welding gas are consumed and wasted. Further, the welding dregs produced during the welding process easily enter the outer pipe 5 to cause a choke so that the welding gas does not flow smoothly. The closest prior art references were disclosed in E.P. Patent No. EP 1-388-389-A (basis for preamble of claim 1), entitled "A REMOVABLE NOZZLE FOR A WELDING GUN", which illustrated a welding system 20 comprising a welding gun 28 having a removable end portion 84 which may be adapted to direct gas 25 from the welding gun 28; U.S. Patent No. 5,278,392, entitled "SELF-CLEANING NOZZLE FOR A GAS WELDING TORCH", which illustrated a welding torch comprising a torch body which conducts electrically, receives a cable for directing a welding wire, and defines a passage for directing a shielding gas; U.S. Patent No. 3,775,584, entitled "WELDING GUN", which illustrated a welding gun comprising an outer housing and a detachable inner body through which the wire electrode and inert gas feed; and U.S. Patent publication No. 2007/0056945, entitled "WELDING TORCH HAVING NOZZLE ASSEMBLY WITH INDEPENDENTLY REMOVABLE COMPONENTS", which illustrated a welding system comprising an electrically insulating sleeve and a perforated screen disposed adjacent to the electrically insulating sleeve.

The primary objective of the present invention is to provide a welding gun that stabilizes and evenly distributes the pressure of the welding gas.

In accordance with the present invention, there is provided a welding gun comprising a bending pipe, an insulating barrel mounted on the bending pipe, a nozzle mounted on the bending pipe, a connector connected with the insulating barrel, and a cap connected with the connector. The bending pipe has an end provided with a mounting seat. A liner tube is mounted in the mounting seat. A spring is mounted on the liner tube. The mounting seat has an exterior provided with an stepped edge, a groove and an external thread. The groove of the mounting seat is defined between the stepped edge and the external thread and has a periphery provided with a plurality of flow channels. The mounting seat has an interior provided with an internal thread. The insulating barrel has an interior provided with a mounting hole, an air chamber and an internal thread. The air chamber of the insulating barrel is connected to the flow channels of the mounting seat. The mounting hole of the insulating barrel is mounted on the stepped edge of the mounting seat to allow a welding gas to flow through the flow channels of the mounting seat into the air chamber of the insulating barrel. The internal thread of the insulating barrel is screwed onto the external thread of the mounting seat. The insulating barrel has a mediate portion provided with a recessed end face which is provided with a plurality of guiding holes to evenly distribute the welding gas. The guiding holes of the insulating barrel are connected to the air chamber and correspond to the plane of the air chamber. The insulating barrel has an exterior provided with an external thread. The nozzle has an exterior provided with an external thread screwed into the internal thread of the mounting seat. The nozzle has an interior provided with an outlet port to allow insertion of an electrode. The connector has a first end provided with a first inner thread screwed onto the external thread of the insulating barrel and a second end provided with a second inner thread. The cap has an end provided with an outer thread screwed into the second inner thread of the connector. The cap covers the mounting seat and the nozzle. The advantage of the present invention is in that the air chamber of the insulating barrel includes a plane and a guiding wall to evenly stabilize a pressure of the welding gas; the connector has an interior provided with a conical guide face and a restriction flow channel; the guide face of the connector corresponds to the guiding holes of the insulating barrel to guide and direct the welding gas toward a central position of the connector; the restriction flow channel of the connector restricts the welding gas in the cap; the guiding holes of the insulating barrel have a long length to guide the welding gas smoothly; and the cap has a constant diameter to direct the welding gas in a straight state so as to prevent from incurring choke of welding dregs.

According to the primary advantage of the present invention, the pressure of the welding gas is stabilized and evenly distributed by the guiding wall of the insulating barrel so that the welding operation is performed safely, and the aesthetic quality of the welding spot is enhanced.

Further benefits and advantages of the present invention will become apparent after a careful reading of the detailed description with appropriate reference to the accompanying drawings.

In the drawings:
FIG. 1 is a cross-sectional operational view of a conventional welding gun in accordance with the prior art.
FIG. 2 is another cross-sectional operational view of the conventional welding gun in accordance with the prior art.
FIG. 3 is a schematic view of showing usage of a welding gun in accordance with the preferred embodiment of the present invention.
FIG. 4 is a perspective cross-sectional assembly view of the welding gun in accordance with the preferred embodiment of the present invention.
FIG. 5 includes an exploded perspective view of the welding gun in accordance with the present invention, and a cross-sectional view of a mark "E".
FIG. 6 is a cross-sectional assembly view of the welding gun as shown in FIG. 5.
FIG. 7 is a cross-sectional view of the welding gun taken along a line B-B as shown in FIG. 6.
FIG. 8 is a cross-sectional operational view of the welding gun in accordance with the preferred embodiment of the present invention.
FIG. 9 is a cross-sectional view of the welding gun taken along a line T-T as shown in FIG. 8.
FIG. 10 is a cross-sectional view showing finish of a welding operation of the welding gun in accordance with the preferred embodiment of the present invention.

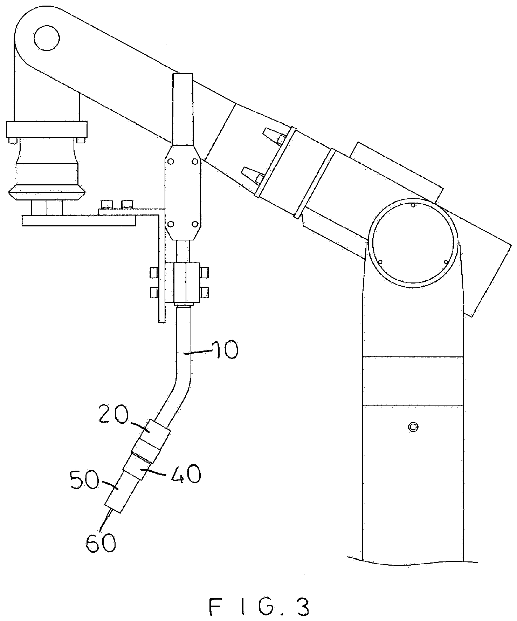

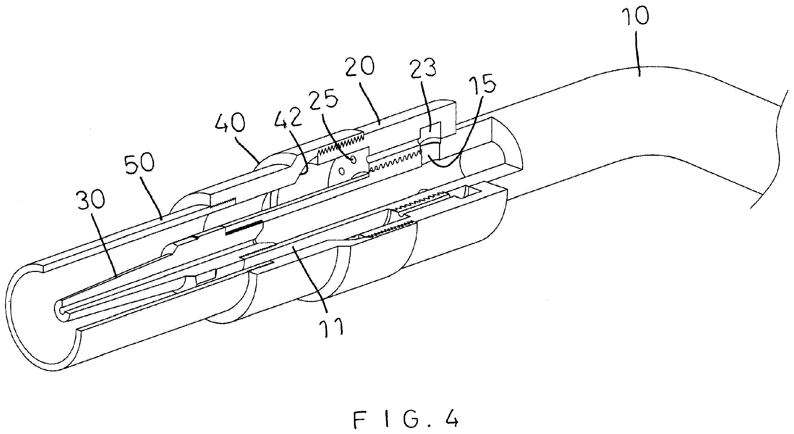

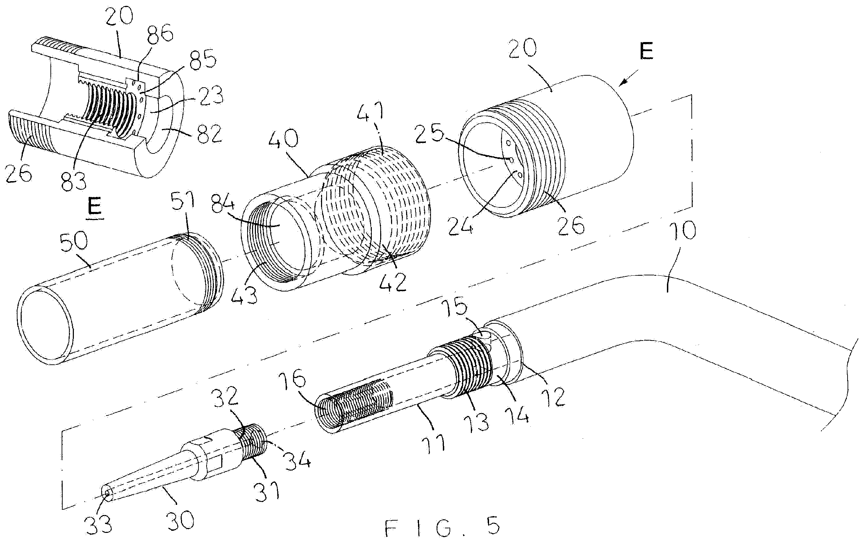

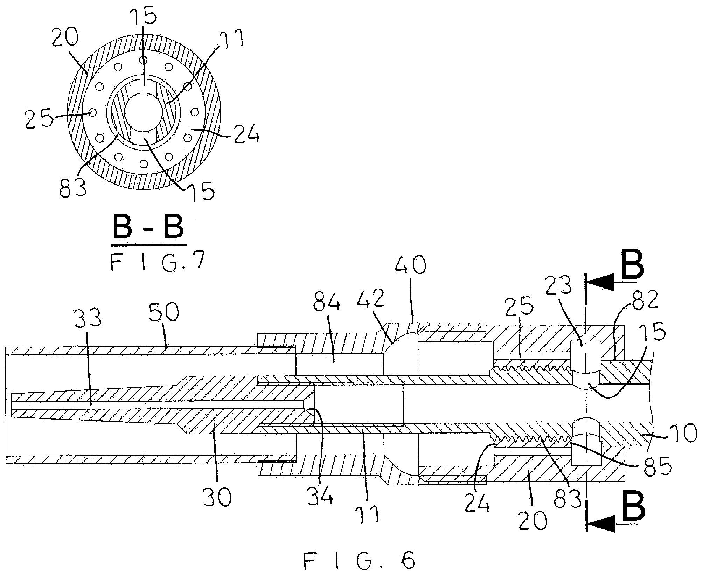

Referring to the drawings and initially to FIGS. 3-7, a welding gun in accordance with the preferred embodiment of the present invention comprises a bending pipe 10, an insulating barrel 20 mounted on the bending pipe 10, a nozzle 30 mounted on the bending pipe 10, a connector 40 connected with the insulating barrel 20, and a cap 50 connected with the connector 40.

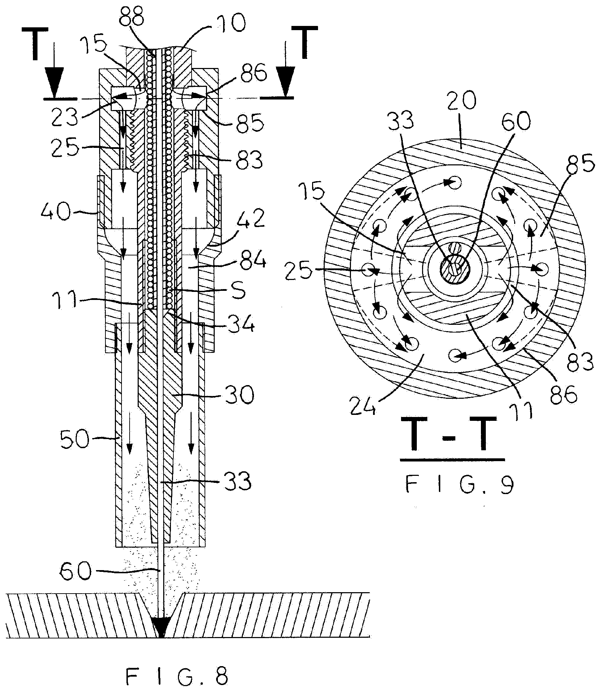

The bending pipe 10 has an end provided with a mounting seat 11. A liner tube 88 (see FIG. 8) is mounted in the mounting seat 11. Preferably, the liner tube 88 is made of rubber or plastic material. A spring "S" (see FIG. 8) is mounted on the liner tube 88 and disposed in the mounting seat 11. The spring "S" has an outer diameter slightly smaller than an inner diameter of the mounting seat 11. The mounting seat 11 has an exterior provided with an stepped edge 12, a groove 14 and an external thread 13. The groove 14 of the mounting seat 11 is defined between the stepped edge 12 and the external thread 13 and has a periphery provided with a plurality of flow channels 15 which extend radially. The mounting seat 11 has an interior provided with an internal thread 16. The flow channels 15 of the mounting seat 11 are connected to the interior of the mounting seat 11.

The insulating barrel 20 is preferably made of insulation material, such as plastic material. The insulating barrel 20 is mounted on the mounting seat 11 of the bending pipe 10 and has an interior provided with a mounting hole 82, an air chamber 23 and an internal thread 83. The air chamber 23 of the insulating barrel 20 is defined between the mounting hole 82 and the internal thread 83 and connected to the flow channels 15 of the mounting seat 11. The mounting hole 82 of the insulating barrel 20 is mounted on the stepped edge 12 of the mounting seat 11 to form a closed state between the mounting hole 82 of the insulating barrel 20 and the stepped edge 12 of the mounting seat 11 to allow a welding gas to flow through the flow channels 15 of the mounting seat 11 into the air chamber 23 of the insulating barrel 20. The air chamber 23 of the insulating barrel 20 includes a plane 85 and a guiding wall 86 to evenly stabilize a pressure of the welding gas in the air chamber 23 of the insulating barrel 20. The internal thread 83 of the insulating barrel 20 is screwed onto the external thread 13 of the mounting seat 11. The insulating barrel 20 has a mediate portion provided with a recessed end face 24 which is provided with a plurality of guiding holes 25 to evenly distribute the welding gas. The guiding holes 25 of the insulating barrel 20 are connected to the air chamber 23 and correspond to the plane 85 of the air chamber 23. The insulating barrel 20 has an exterior provided with an external thread 26.

The nozzle 30 has an exterior provided with an external thread 31 screwed into the internal thread 16 of the mounting seat 11. The nozzle 30 has a mediate portion provided with an outer rim 32 abutting the mounting seat 11. The nozzle 30 has an interior provided with an outlet port 33 to allow insertion of an electrode 60. The outlet port 33 of the nozzle 30 has an end provided with a conical hole 34 connected to the interior of the mounting seat 11.

The connector 40 has a first end provided with a first inner thread 41 screwed onto the external thread 26 of the insulating barrel 20 and a second end provided with a second inner thread 43. The connector 40 has an interior provided with a conical guide face 42 and a restriction flow channel 84. The guide face 42 of the connector 40 corresponds to the guiding holes 25 of the insulating barrel 20 to guide and direct the welding gas toward a central position of the connector 40. The guide face 42 of the connector 40 is disposed between the restriction flow channel 84 and the guiding holes 25 of the insulating barrel 20. The restriction flow channel 84 of the connector 40 restricts the welding gas in the cap 50.

The cap 50 has an end provided with an outer thread 51 screwed into the second inner thread 43 of the connector 40. The cap 50 covers the mounting seat 11 and the nozzle 30.

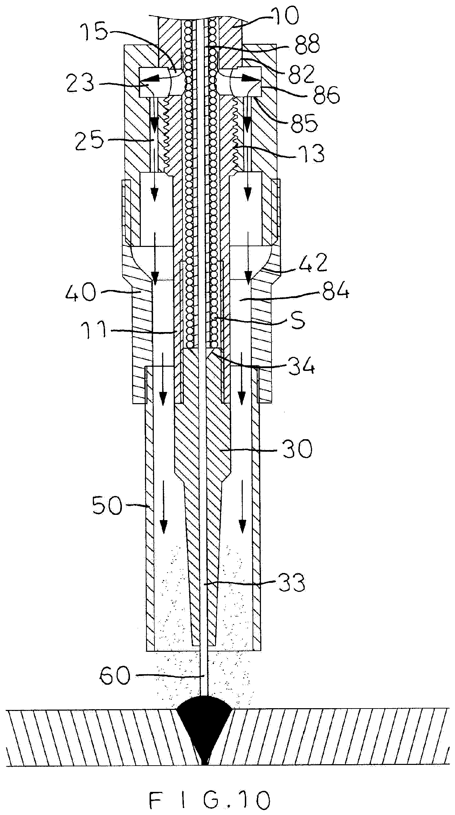

In operation, referring to FIGS. 8-10 with reference to FIGS. 3-7, the welding gas initially flows from the bending pipe 10 into the mounting seat 11. Then, the welding gas in the mounting seat 11 flows through the flow channels 15 of the mounting seat 11 into the air chamber 23 of the insulating barrel 20. At this time, the guiding wall 86 of the insulating barrel 20 stabilizes and evenly distributes the pressure of the welding gas in the air chamber 23 of the insulating barrel 20. Then, the welding gas flows through the guiding holes 25 of the insulating barrel 20 into the connector 40. At this time, the guide face 42 of the connector 40 corresponds to the guiding holes 25 of the insulating barrel 20 to guide and direct the welding gas toward the central position of the connector 40, while the restriction flow channel 84 of the connector 40 restricts the welding gas in the cap 50. Finally, the welding gas flows into the cap 50 and is injected outward from the cap 50. In such a manner, the welding gas covers and protects a welding zone of the electrode 60 to prevent from incurring oxidation and pollution. At the same time, the welding gas stabilizes the welding operation to provide a safe welding process and to enhance the aesthetic quality of the welding spot. In addition, the welding gas is stabilized and regulated to save the energy and the amount of the welding gas.

Accordingly, the pressure of the welding gas is stabilized and evenly distributed by the guiding wall 86 of the insulating barrel 20 so that the welding operation is performed safely, and the aesthetic quality of the welding spot is enhanced.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A welding gun comprising:
a bending pipe (10);
an insulating barrel (20) mounted on the bending pipe (10); a nozzle (30) mounted on the bending pipe (10); a connector (40) connected with the insulating barrel (20); and
a cap (50) connected with the connector (40);
wherein:
the bending pipe (10) has an end provided with a mounting seat (11);
a liner tube (88) is mounted in the mounting seat (11); a spring (S) is mounted on the liner tube (88); the mounting seat (11) has an exterior provided with an stepped edge (12), a groove (14) and an external thread (13);
the groove of the mounting seat (11) is defined between the stepped edge (12) and the external thread (13)
and has a periphery provided with a plurality of flow channels (15);
the mounting seat (11) has an interior provided with an internal thread (16);
the insulating barrel (20) has an interior provided with a mounting hole (82), an air chamber (23) and an internal thread (83);
the air chamber (23) of the insulating barrel (20) is connected to the flow channels (15) of the mounting seat (11);
- the mounting hole (82) of the insulating barrel (20) is mounted on the stepped edge (12) of the mounting seat (11) to allow a welding gas to flow through the flow channels (15) of the mounting seat (11) into the air chamber (23) of the insulating barrel (20) the internal thread (16) of the insulating barrel (20) is screwed onto the external thread (13) of the mounting seat (11); the insulating barrel (20) has a mediate portion provided with a recessed end face (24) which is provided with a plurality of guiding holes (25) to evenly distribute the welding gas;
the guiding holes (25) of the insulating barrel (20) are connected to the air chamber (23) and correspond to the plane of the air chamber (23); the insulating barrel (20) has an exterior provided with an external thread (26);
the nozzle (30) has an exterior provided with an external thread (31) screwed into the internal thread of the mounting seat (11); seat (11); the nozzle (30) has an interior provided with an outlet port (33) to allow insertion of an electrode (60);
the connector (40) has a first end provided with a first inner thread (41) screwed onto the external thread (13) of the insulating barrel (20) and a second end provided with a second inner thread (43);
the cap (50) has an end provided with an outer thread (51) screwed into the second inner thread (43) of the connector (40); and
the cap (50) covers the mounting seat (11) and the nozzle (30); **characterized in that**
the air chamber (23) of the insulating barrel (20) includes a plane (85) and a guiding wall (86) to evenly stabilize a pressure of the welding gas;
the connector (40) has an interior provided with a conical guide face (42) and a restriction flow channel (84);
the guide face (42) of the connector corresponds to the guiding holes (25) of the insulating barrel (20) to guide and direct the welding gas toward a central position of the connector (40) the restriction flow channel (84) of the connector (40) restricts the welding gas in the cap; (50) and the cap (50) has a constant diameter.

2. The welding gun of claim 1, wherein the outlet port of the nozzle (30) has an end provided with a conical hole (34) connected to the interior of the mounting seat (11).

3. The welding gun of claim 1, wherein the insulating barrel (20) is made of insulation material including plastic material.

## Patentansprüche

1. Schweißpistole, aufweisend:
ein gebogenes Rohr (10);
ein isoliertes Rohr (20), das an dem gebogenen Rohr (10) angebracht ist;
eine Düse (30), die an dem geborgenen Rohr (10) angebracht ist;
ein Verbindungsstück (40), das mit der isolierten Rohr (20) verbunden ist; und
eine Kappe (50), die mit dem Verbindungsstück (40) verbunden ist;
wobei:
das gebogene Rohr (10) ein Ende hat, das mit einem Montagesitz (11) versehen ist;
ein Einsatzrohr (88) in dem Montagesitz (11) angebracht ist;
eine Feder (S) am Einsatzrohr (88) angebracht ist;
der Montagesitz (11) eine Außenseite hat, die mit einer gestuften Kante (12), einer Nut (14) und einem Außengewinde (13) versehen ist;
die Nut des Montagesitzes (11) zwischen der gestuften Kante (12) und dem Außengewinde (13) definiert ist und einen Umfang aufweist, der mit einer Vielzahl von Strömungskanälen (15) versehen ist;
der Montagesitz (11) einen Innenraum aufweist, der mit einem Innengewinde (16) versehen ist;
das isolierte Rohr (20) einen Innenraum aufweist, der mit einer Befestigungsöffnung (82), einer Luftkammer (23) und einem Innengewinde (83) versehen ist;
die Luftkammer (23) des isolierten Rohres (20) mit den Strömungskanälen (15) des Montagesitzes (11) verbunden ist;
die Montageöffnung (82) des isolierten Rohres (20) an der gestuften Kante (12) des Montagesitzes (11) angebracht ist, um zu ermöglichen, dass ein Schweißgas durch die Strömungskanäle (15) des Montagesitzes (11) in die Luftkammer (23) des isolierten Rohres (20) strömt;
das Innengewinde (16) des isolierten Rohres (20) auf das Außengewinde (13) des Montagesitzes (11) aufgeschraubt ist;
das isolierte Rohr (20) einen Zwischenbereich aufweist, der mit einer zurückgesetzten Endfläche (24) versehen ist, die mit einer Mehrzahl von Führungsöffnungen (25) versehen ist, um das Schweißgas gleichmäßig zu verteilen;
die Führungsöffnungen (25) des isolierten Rohres (20) mit der Luftkammer (23) verbunden sind und der Ebene der Luftkammer (23) entsprechen;
das isolierte Rohr (20) eine Außenseite hat, die mit einem Außengewinde (26) versehen ist;
die Düse (30) eine Außenseite hat, die mit einem Außengewinde (31) versehen ist, welches in das Innengewinde des Montagesitzes (11) geschraubt ist;
die Düse (30) einen Innenraum aufweist, der mit einer Auslassöffnung (33) versehen ist, um das Einführen einer Elektrode (60) zu ermöglichen;
das Verbindungsstück (40) ein erstes Ende, das mit einem ersten Innengewinde (41) versehen ist, welches auf das Außengewinde (13) des isolierten Rohres (20) geschraubt ist, und ein zweites Ende hat, das mit einem zweiten Innengewinde (43) versehen ist;
die Abdeckung (50) ein Ende aufweist, das mit einem Außengewinde (51) versehen ist, welches in das zweite Innengewinde (43) des Verbindungsstücks (40) geschraubt ist; und
die Abdeckung (50) bedeckt den Montagesitz (11) und die Düse (30) abdeckt;
**dadurch gekennzeichnet, dass**
die Luftkammer (23) des isolierten Rohres (20) eine Ebene (85) und eine Führungswand (86) aufweist, um einen Druck des Schweißgases gleichmäßig zu stabilisieren;
das Verbindungsstück (40) einen Innenraum aufweist, der mit einer konischen Führungsfläche (42) und einem Drosselströmungskanal (84) versehen ist;
die Führungsfläche (42) des Verbindungsstücks (40) den Führungsöffnungen (25) des isolierten Rohres (20) entspricht, um das Schweißgas zu einer zentralen Position des Verbindungsstücks (40) zu führen und zu leiten;
der Drosselströmungskanal (84) des Verbindungsstücks (40) das Schweißgas in der Abdeckung (50) begrenzt;
die Abdeckung (50) einen konstanten Durchmesser aufweist.

2. Schweißpistole nach Anspruch 1, wobei die Auslassöffnung der Düse (30) ein Ende aufweist, das mit einer konischen Öffnung (34) versehen ist, die mit dem Inneren des Montagesitzes (11) verbunden ist.

3. Schweißpistole nach Anspruch 1, wobei das isolierte Rohr (20) aus einem Isoliermaterial einschließlich Kunststoffmaterial hergestellt ist.

## Revendications

1. Pistolet de soudage comprenant :
un tuyau pliant (10) ;
un barillet isolant (20) monté sur le tuyau pliant (10) ;
un embout (30) monté sur le tuyau pliant (10) ;
un connecteur (40) connecté au barillet isolant (20) ; et
un bouchon (50) connecté au connecteur (40) ;
où :
le tuyau pliant (10)
a une extrémité pourvue d'un siège de montage (11) ;
un tube-guide (88) est monté dans le siège de montage (11) ;
un ressort (S) est monté sur le tube-guide (88) ;
le siège de montage (11)
a une extrémité pourvue d'un bord décalé (12),
une rainure (14) et un filetage extérieur (13) ;
la rainure du siège de montage (11)
est définie entre le bord décalé
et le filetage extérieur (13)
et a une périphérie pourvue d'une pluralité de canaux de flux (15) ;
le siège de montage (11)
a un intérieur pourvu d'un filetage intérieur (16) ;
le barillet isolant (20)
a un intérieur pourvu d'un trou de montage (82), une chambre à air (23) et un filetage intérieur (83) ;
la chambre à air (23) du barillet isolant (20) est connectée aux canaux de flux (15) du siège de montage (11) ;
le trou de montage (82) du barillet isolant (20) est monté sur le bord décalé (12) du siège de montage (11)
pour permettre l'écoulement d'un gaz de soudage à travers les canaux de flux (15) du siège de montage (11) dans la chambre à air (23) du barillet isolant (20) le filetage intérieur (16) du barillet isolant (20) est vissé sur le filetage extérieur (13) du siège de montage (11) ;
le barillet isolant (20) a une partie intermédiaire pourvue d'une face d'extrémité creusée (24) qui est pourvue d'une pluralité de trous de guidage (25) pour distribuer uniformément le gaz de soudage ;
les trous de guidage (25) du barillet isolant (20) sont connectés à la chambre à air (23) et correspondent au plan de la chambre à air (23) ;
le barillet isolant (20) a un extérieur pourvu d'un filetage extérieur (26) ;
l'embout (30) a un extérieur pourvu d'un filetage extérieur (31) vissé dans le filetage intérieur du siège de montage (11) ;
l'embout (30) a un intérieur pourvu d'un port de sortie (33) pour permettre l'insertion d'une électrode (60) ;
le connecteur (40) a une première extrémité pourvue d'un premier filetage intérieur (41) vissé sur le filetage extérieur (13) du barillet isolant (20) et une deuxième extrémité pourvue d'un deuxième filetage intérieur (43) ;
le bouchon (50) a une extrémité pourvue d'un filetage extérieur (51) vissé dans le deuxième filetage intérieur (43) du connecteur (40); et le bouchon (50) couvre le siège de montage (11) et l'embout (30) ;
**caractérisé en ce que**
la chambre à air (23) du barillet isolant (20) comprend un plan (85) et une paroi de guidage (86) pour stabiliser uniformément une pression du gaz de soudage ;
le connecteur (40) a un intérieur pourvu d'une face de guidage conique (42) et un canal de flux de restriction (84) ;
la face de guidage (42) du connecteur correspond aux trous de guidage (25) du barillet isolant (20) pour guider et diriger le gaz de soudage vers une position centrale du connecteur (40)
le canal de flux de restriction (84) du connecteur (40) limite le gaz de soudage dans le bouchon (50) ;
et le bouchon (50) a un diamètre constant.

2. Pistolet de soudage de la revendication 1, où le port de sortie de l'embout (30) a une extrémité pourvue d'un trou conique (34) connecté à l'intérieur du siège de montage (11).

3. Pistolet de soudage de la revendication 1, où le barillet isolant (20) est en matériel d'isolation comprenant de la matière plastique.
